# EUROPEAN PATENT SPECIFICATION

(11) **EP 2 133 976 B1**
(45) Date of publication and mention of the grant of the patent: **12.10.2016**
(21) Application number: 09164960.8
(22) Date of filing: 30.07.2008
(51) Int. Cl.: H02J 7/00

(54) **Communication device**
Kommunikationsvorrichtung
Dispositif de communication

(30) Priority: 12.05.2008 US 52545 P
(43) Date of publication of application: 16.12.2009
(62) Divisional of application: 08161471.1
(73) Proprietor: BlackBerry Limited, Waterloo, ON N2K 0A7 (CA)
(72) Inventor: Hofer, Joseph M., Kitchener, ON, N2H 5C5 (CA); Narayanar, Dulari, Waterloo, ON, N2L 5C8 (CA); Wood, Todd Andrew, Guelph, ON, N1H 3Z6 (CA)
(74) Representative: Fennell, Gareth Charles

(56) References cited:
- EP-A- 1 918 955
- DE-A- 10 308 903
- DE-C1- 4 310 600
- JP-A- 06 124 735
- JP-A- 2000 134 808
- JP-A- 2001 346 335
- JP-A- 2002 335 636
- JP-A- 2003 087 983
- JP-A- 2003 134 680
- JP-A- 2003 169 121
- JP-A- 2003 319 566
- JP-A- 2005 110 475
- JP-A- 2006 050 789
- JP-A- 2007 005 074
- JP-A- 2008 011 668
- JP-A- 2008 092 738
- US-A- 4 141 616
- US-A- 6 002 921
- US-A1- 2005 096 100
- US-A1- 2006 276 219
- US-B1- 6 356 053
- US-B1- 6 438 229

## Description

### BACKGROUND OF THE DISCLOSURE

This disclosure is directed to personal communication devices, and more specifically to a mobile communication device configured for use with a charging accessory.

Mobile communication devices are well known and are utilized for both business and personal use. Conventional mobile communication devices are typically two-way communication devices that offer voice and data communication, such as email and text messaging. Additional features such as Internet browsing, navigation systems and calendar applications are also available on some conventional devices.

Typical mobile communication devices include a keyboard having a plurality of keys configured for typing phone numbers, email, text messages, and the like. Such keyboards can either be a full QWERTY keyboard, where each key is associated with a corresponding letter, or a reduced keyboard, where multiple letters are associated with a corresponding key.

To enable charging of such devices, ports are often provided on the side and/or bottom of the device for engaging corresponding plugs. Such plugs are either attached to a cord that is plugged directly into an electrical outlet, for example, or are engaged with a separate charging accessory, often referred to as a cradle. The cradle is typically in communication with a user's personal computer, and enables the device to be charged and synchronized with the personal computer when charging in the cradle. Alignment of the device port and the cradle plug are required to charge the device, which can become an issue if the device is not properly placed in the cradle. Further, misalignment between the device port and the cradle plug can scratch the device, causing damage.

Accordingly, there is a need for a communication device and charging accessory that addresses the above issues.

JP2007-005074 discloses an example of the prior art.

### BRIEF SUMMARY OF THE DISCLOSURE

The present disclosure provides a communication device configured for engaging and being charged by a charging accessory. Specifically, a communication device is provided and includes a housing, a processor enclosed within the housing, a device display provided on the housing and in communication with the processor, at least one navigational input means in communication with the processor, at least one data entry input means in communication with the processor, and a pair of charging contacts provided on the housing and configured for engaging a corresponding charging accessory and enabling charging of the device.

### BRIEF DESCRIPTION OF THE DRAWINGS

For a better understanding of the various embodiments described herein and to show more clearly how they may be carried into effect, reference will now be made, by way of example only, to the accompanying drawings which show at least one exemplary embodiment and in which:
FIG. 1 is a block diagram of a communication system including an embodiment of a mobile device;
FIG. 2 is a front perspective view of the mobile device;
FIG. 3 is a back perspective view of the mobile device;
FIG. 4 is a left side view of the mobile device;
FIG. 5 is a right side view of the mobile device;
FIG. 6 is a bottom view of the mobile device;
FIG. 7 is a front perspective view of a charging accessory prepared for engagement with the mobile device;
FIG. 8 is a front perspective view of the charging accessory engaged with the mobile device;
FIG. 9 is a front view of the mobile device engaged in the charging accessory; and
FIG. 10 is a close-up view showing the mobile device engaged in the charging accessory.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, hereafter referred to as a mobile device, which can be configured according to an IT policy. Examples of applicable communication devices include pagers, cellular phones, cellular smart-phones, wireless organizers, personal digital assistants, computers, laptops, handheld wireless communication devices, wirelessly enabled notebook computers and the like.

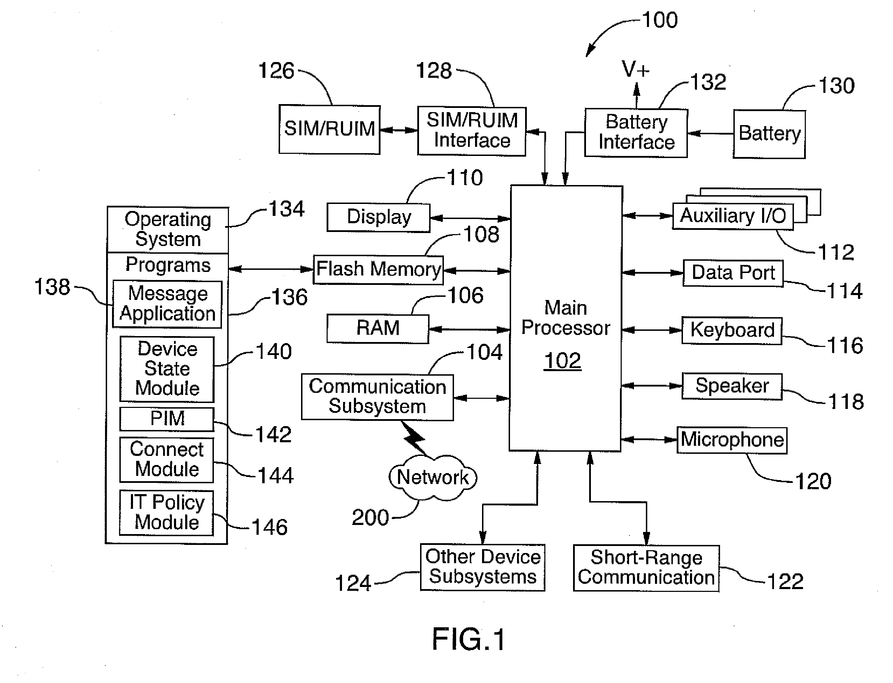

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIG. 1.

Referring to FIG. 1, shown therein is a block diagram of an exemplary embodiment of a communication or mobile device 100 which includes a number of components such as a main processor 102 that controls the overall operation of the mobile device. Communication functions, including data and voice communications, are performed through a communication subsystem 104 which receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one exemplary implementation, other wireless networks may also be associated with the mobile device in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a data entry input means or keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with.

The connect module 144 includes a set of APIs that can be integrated with the mobile device 100 to allow the mobile device to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manger. These instructions can then be passed to the IT policy module 146 to modify the configuration of the device 100. Alternatively, in some cases, the IT policy update can also be done over a wired connection.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

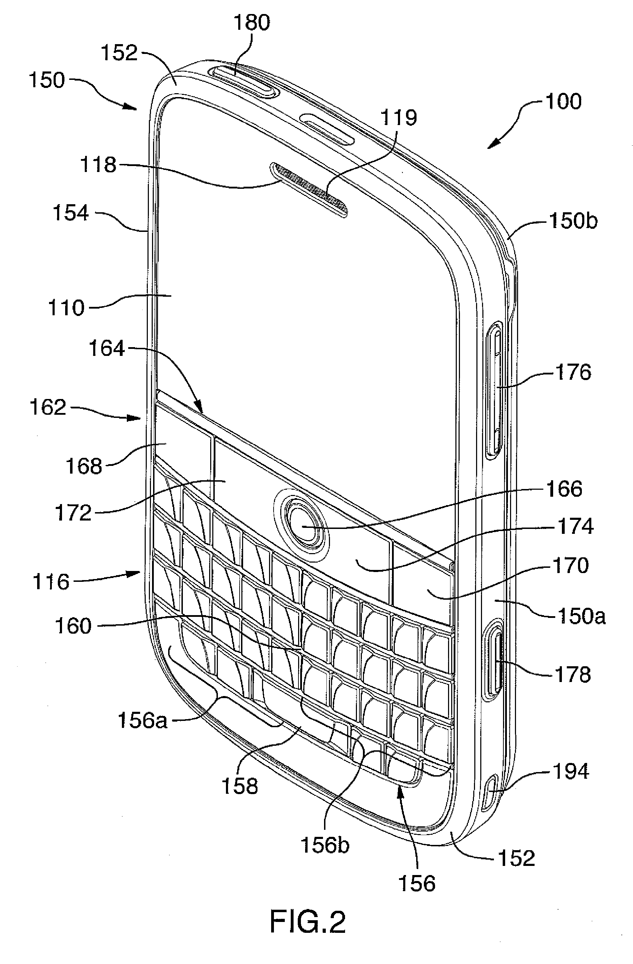

Referring now to FIGs. 2-6, the external components of the mobile device 100 will now be described, although it will be appreciated that the device 100 is not limited to the external components described herein, and that additional features may be appropriate. The internal components of the device 100, such as the processor 102, RAM 106, flash memory 108, SIM card 126 and battery 130, for example, are enclosed in a housing 150 that is sized to comfortably fit in a user's hand, as known in the art. The housing 150 is preferably manufactured of a lightweight and durable material, such as a thermoplastic, leather, or the like, and is composed of a front housing 150a and a back housing 150b.

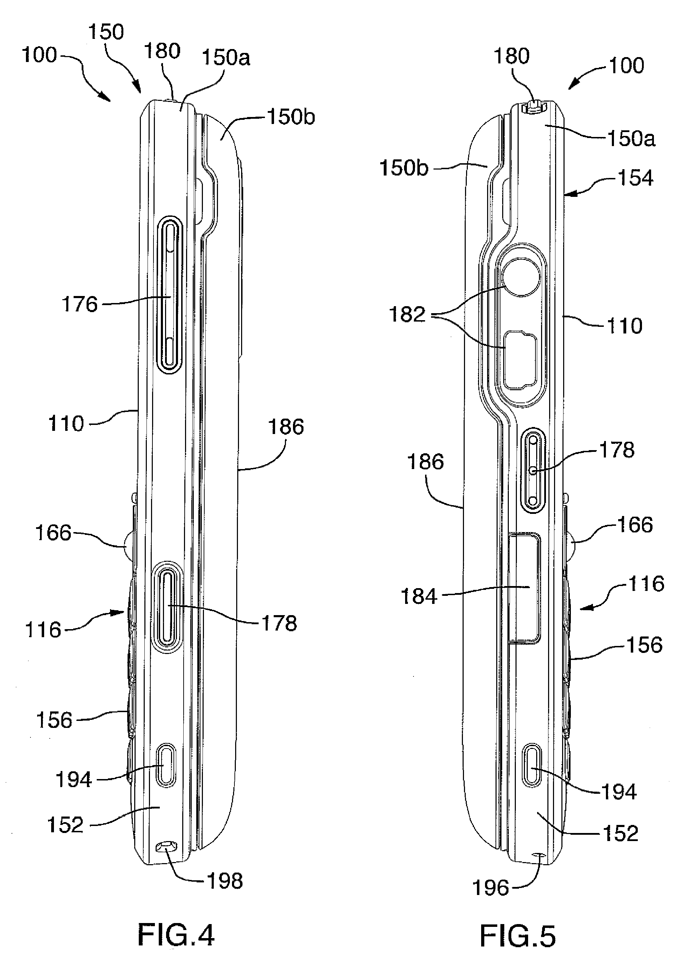

As seen in FIGs. 4-6, the front and back housings 150a, 150b are attached to and detached from each other by a housing clasp 151, herein located on the back housing. To detach the front and back housings 150a, 150b from each other, the user presses the clasp 151, disengaging an internal tab (not shown) on the clasp from a corresponding aperture (not shown) on the front housing. Similarly, to secure the front housing 150a to the back housing 150b, the user aligns the housings such that the tab on the clasp is aligned with the corresponding aperture, and presses the housings together until securely fastened to each other. Upon engagement, a "click" or other audible feedback is provided, notifying the user that the housing 150 is properly secured. However, it is recognized that other attachment mechanisms may be appropriate for securing the front and back housings 150a and 150b, such as a snap-fit or tongue-and-groove arrangement, for example.

The housing 150 preferably has rounded or curved edges 152 to enable the user to comfortably grasp the device 100, although it is recognized that other similar shapes may be suitable. It is contemplated that rounded edges 152 provide a more comfortable fit in the user's palm than straight or right-angle edges, which may cause discomfort if the device 100 is held in the user's hand for long periods of time.

The front housing 150a defines a front face 154 that includes the display 110, the speaker 118 and the keyboard 116. The display 110 is preferably arranged in the upper portion of the front face 154, and defines an opening for receiving the speaker 118. As seen in FIG. 2, the speaker 118 is recessed in the display 110 for preventing interference with the user's pocket or the device holster, for example, which could scratch and cause damage to the speaker. To further protect the speaker 118, a mesh cover 119 is provided over the speaker for preventing the entry of dirt, moisture and other contaminants.

The keyboard 116 is generally provided in the lower portion of the front face 154, and is preferably a full QWERTY keyboard, as known in the art, although other types of keyboards may be appropriate, such as a reduced keyboard, a QWERTZ keyboard or the like. The keyboard 116 includes a plurality of raised keys 156 that are configured for providing tactile feedback to the user during typing. Best seen in FIGs. 2,4 and 5, with the exception of a space bar 158, which is arranged parallel to the front face 154, the keys 156 are preferably arranged at an angle relative to the front face, to enable the user to easily identify the desired keys 156 on the keyboard 116 during typing. Specifically, the keys 156a, arranged in the five columns on the left side of the keyboard 116, are angled upwards relative to the front face 154, in a direction toward a center 160 of the keyboard. The keys 156b, arranged in the five columns on the right side of the keyboard 116, are angled upwards relative to the front face 154, in a direction towards the center 160. It is contemplated that such an arrangement will enable the user to easily identify the center 160 of the keyboard 116, and accordingly, identify the appropriate keys 156 for typing. However, it is appreciated that the keyboard 116 is not limited to such an arrangement.

A navigation pane 162 is preferably provided between the display 110 and the keyboard 116, and includes a plurality of function keys 164 and a navigational input means 166. The function keys 164 preferably include a send key 168, an end key 170, a menu key 172 and a "back" or return key 174, as known in the art. Although other arrangements may be appropriate, the send and end keys 168, 170 are preferably located on the opposite far edges of the navigation pane 162, as seen in FIG. 2. The menu and return keys 172, 174 are located on either side of the navigational input means 166. Preferably, the input means 166 is a trackball, which is configured for enabling cursor movement in all directions, as well as enabling selection of an item when pushed inward, as known in the art. The trackball 166 is preferably partially recessed in the housing 150, to provide space for the user's thumb to efficiently utilize the trackball, and to prevent interference and damage to the trackball when the device 100 is inserted into the user's pocket, bag or the like.

The device 100 also includes a side volume button 176, a pair of convenience keys 178 provided on opposite sides of the device, and a mute button 180 provided on a top of the device, although it is recognized that alternate locations for the keys may be appropriate. To enable the user to easily find and engage the keys 176, 178 and 180, each of the keys protrudes from a corresponding opening defined in the housing 150. As known in the art, the convenience keys 178 are configured such that the user can assign them to open a particular application, such as the camera function, email, calendar, or to lock the device 100, for example.

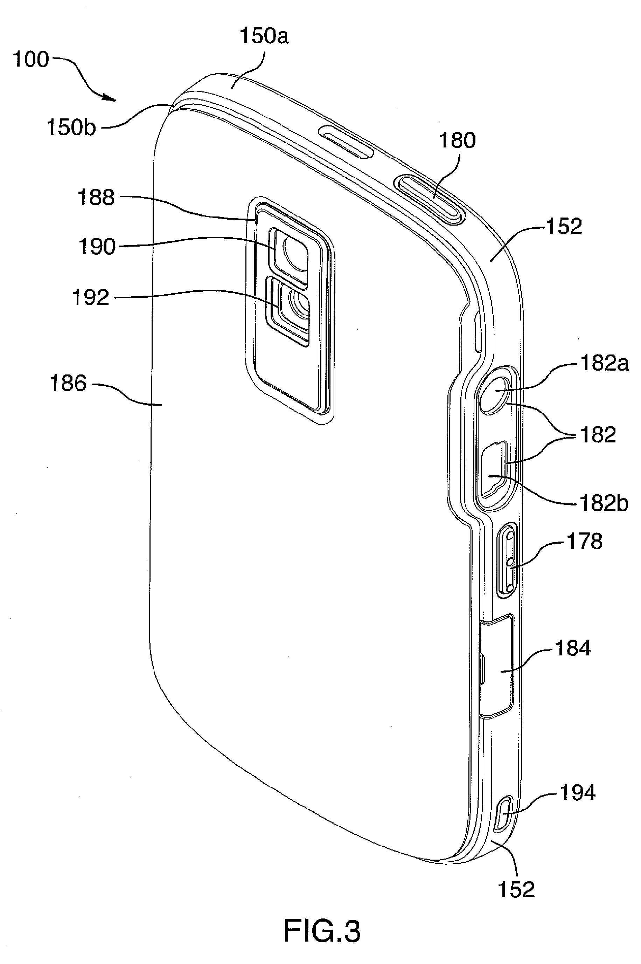

As seen in FIG. 3, the device 100 also defines a pair of apertures 182 and specifically an audio jack 182a for receiving an audio headset, and a USB port 182b for receiving a USB charger, for example, although additional or fewer apertures may be suitable, depending on the application. A memory card slot cover 184 is also provided and is configured for preventing dirt and moisture from entering a memory slot (not shown) defined on the side of the device.

The back housing 150b defines a rear face 186 of the device 100 that defines a recess 188 in which a camera lens 190 and a flash 192 are provided. The camera function of the device 100 can be activated by pressing an associated convenience key 178 or by selecting the application from the display 110, as known in the art.

The device 100 also includes a pair of charging contacts 194 provided on opposing sides of the device, as seen in FIGs. 2-6. Preferably, the charging contacts 194 are located on the lower portion of the device 100 and the housing 150, and specifically on a portion of the curved edges 152. In other words, the charging contacts 194 are curved to complement the shape of the device edges 152. The charging contacts 194 are configured for engaging corresponding charger pins on a charging accessory 250, which will be described in further detail below. Unlike many conventional devices, which include ports having the charging contacts located therein, the charging contacts 194 in the present device 100 are arranged flush with the side of the front housing 150a, and as seen in FIG. 2, are not open apertures or ports. It is contemplated that this arrangement prevents dirt, moisture and other contaminants from entering the device 100 and damaging its internal components.

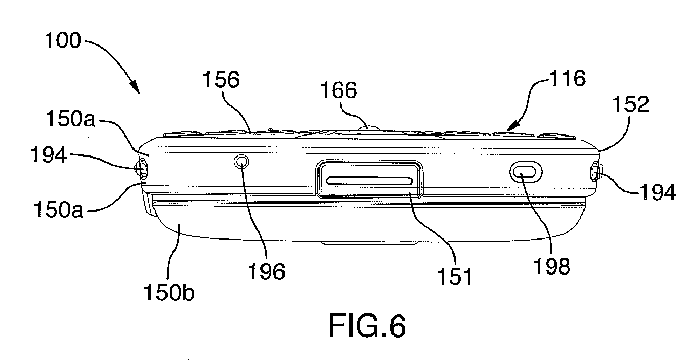

Referring now to FIG. 6, in addition to the housing clasp 151, the bottom of the device housing 150 defines a pinhole 196 in registry with the internal microphone 120, enabling the user to speak into the microphone 120, and a lanyard hole spaced 198 apart from the microphone opening and configured for receiving a lanyard (not shown), as known in the art. The pinhole 196 and the lanyard hole 198 are also configured for engaging corresponding pins in the charging accessory 250, which is described in further detail below.

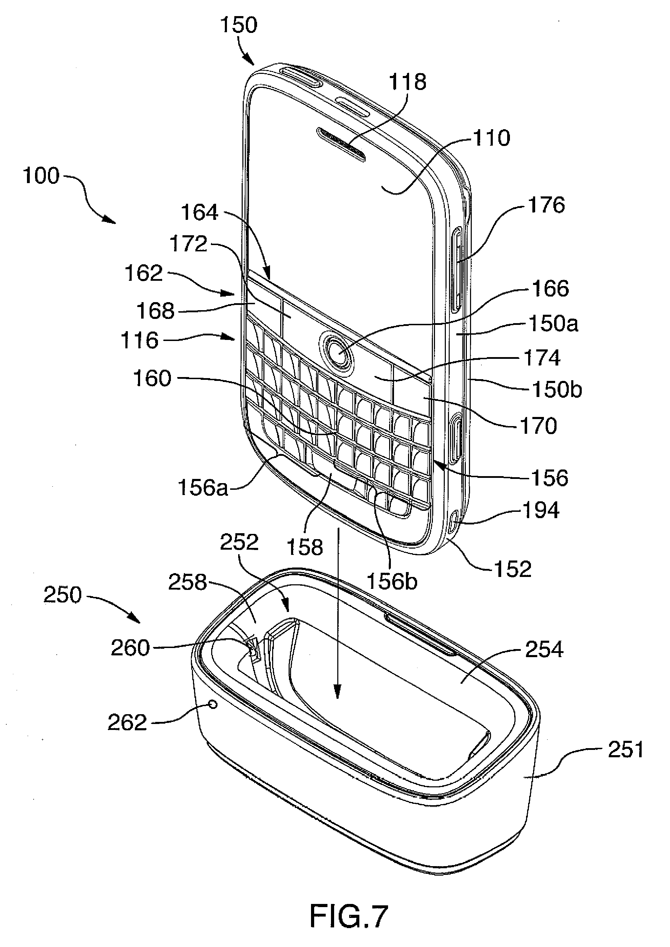

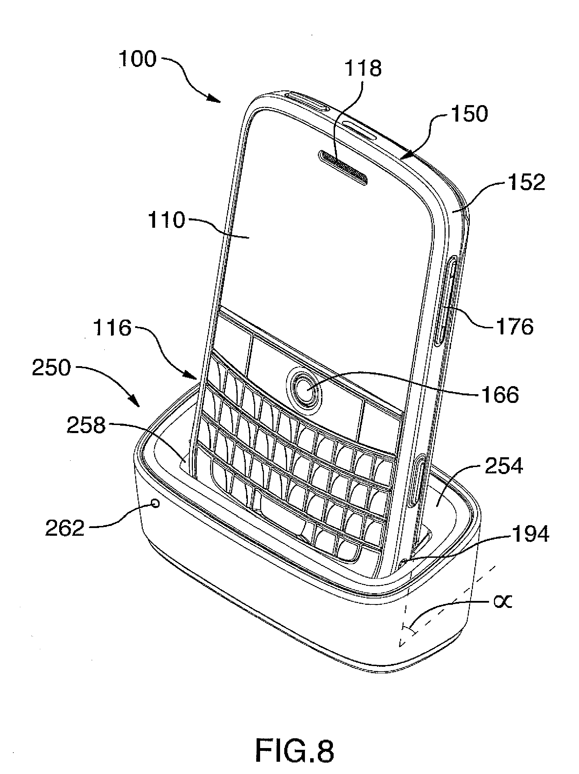

To enable charging of the device 100, the charging accessory 250 is disclosed, as shown in FIGs. 7-10. The charging accessory 250 is configured for attachment to the user's personal computer (not shown) by either a wired or wireless connection, includes an accessory housing 251, and defines a channel 252 configured for receiving the device 100. Preferably, a backside 254 of the channel 252 is arranged at an obtuse angle α relative to a base 256 of the channel, such that when the device 100 is placed therein, the display 110 can easily be seen, as seen in FIG. 8. It is also contemplated that by providing the angled backside 254, the device 100 can more easily be guided into proper orientation for charging, which will be described in more detail below. A pair of opposing sidewalls 258 join the backside 254 and a front side of the channel 252.

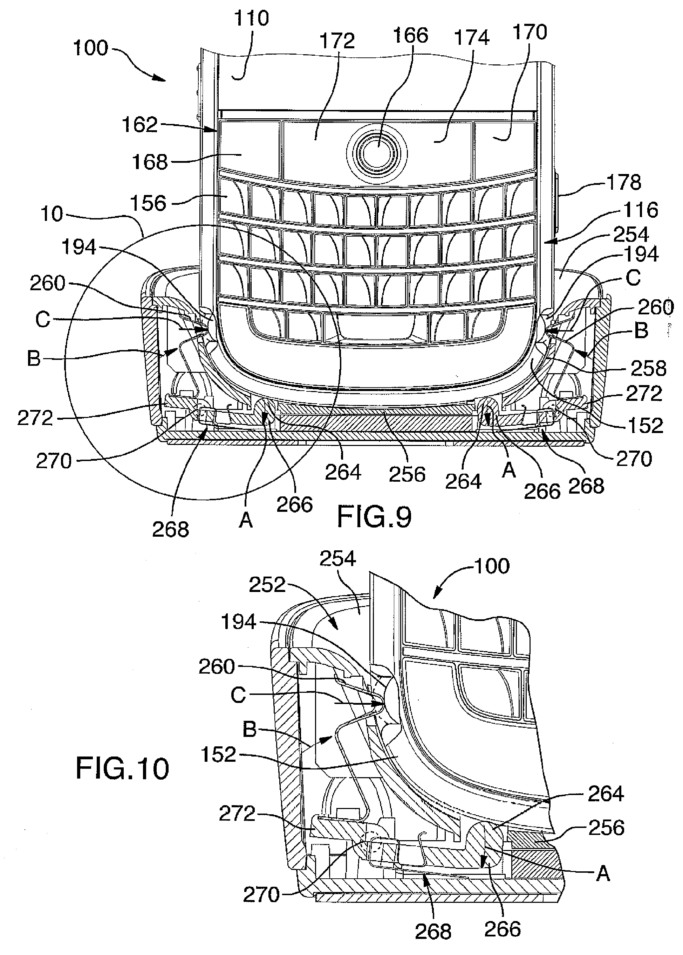

As seen in FIGs. 9 and 10, the opposing sidewalls 258 of the channel 252 include a charger pin 260, each of which is configured for engaging a corresponding charging contact 194 on the side of the device 100. To properly align and secure the device 100 within the channel 252, the base 256 includes a pair of spaced apart buttons 264, each of which is configured for engaging a corresponding one of the microphone pinhole 196 and the lanyard hole 198. The buttons 264 serve as an additional mechanism for ensuring proper alignment of the charging contacts 194 and the charger pins 260.

Specifically, the buttons 264 are each provided on a proximal end 266 of a corresponding lever 268 that is provided within the charging accessory 250 and is configured for actuation about a pivot point 270. When the device 100 is received in the channel 252, its weight will cause each of the levers 268 to actuate about their respective pivot points 270 and in the direction of arrow A. As the levers 268 actuate, the corresponding charger pin 260, which is in contact with a distal end 272 of the lever 268, is actuated in the direction of arrow B. Such movement of the charger pin 260 will push the pin in the direction of arrow C, such that it engages its corresponding charging contact 194, depressing the contact and causing current to charge the battery 130. The charger pins 260 compress the charging contacts 194, essentially "pinching" the device and ensuring that current flows through the pins to the contacts. However, it is recognized that alternative mechanisms may be appropriate for securing the device 100 within the channel 252 and charging the device.

Upon proper engagement, the device battery 130 begins charging. Specifically, when each of the charger pins 260 is properly engaged with a corresponding one of the charging contacts 194, current will pass through the respective charger pins and charging contacts to the device battery 130, which will begin to charge. If the device 100 is not properly inserted into the channel 252, such that the device weight does not properly actuate both of the buttons 264, or only one of the charging contacts 194 is properly engaged, the device will not charge. It is contemplated that this arrangement will prevent scratching or external damage to the device housing 150, because the device 100 does not need to engage a plug extending from the charging accessory base, unlike many conventional charging devices. It is further contemplated that the combination of the angled backside 254 and the charger pins 260 provides a guide for properly aligning the device 100 with the channel 252, without the need of complicated external plugs that can be prone to misalignment and cause damage to the device upon misalignment.

To provide visual indication of proper engagement of the device 100 with the charging accessory 250, it is contemplated that one or both of the trackball 166 and the keyboard keys 156 will illuminate (not shown). Further, upon proper engagement, the display 110 of the device will automatically indicate that the device is charging, such as by a flashing battery icon, battery icon with a "lightening bolt" or charging icon (not shown) placed thereon, or the like. It is also contemplated that the charging accessory 250 can include an external LED 262 that illuminates when the device 100 is charging.

In addition, when charging is commenced, the device display 110 will switch to a "clock application" (not shown), effectively turning the device 100 into a desk clock, providing the user with the present time. Such an application enables the device 100 to serve a specific function while charging (i.e., a clock function), unlike many conventional devices, which do not provide additional functions while charging. If the device 100 is not properly inserted into the channel 252, or if one of the charger pins 260 is not properly engaged with its corresponding charging contact 194, the visual indicators will not illuminate, indicating to the user that the device is not properly inserted in the charging accessory 250.

It is also contemplated that upon proper engagement of the device 100 in the channel 252, instead of or in addition to the clock application, an alternative status indicator application (not shown) can show new notifications on the display 110. For example, the application could show the number of new e-mail messages, new SMS text messages, or new instant messages. Alternatively, the application could also show a new calendar appointment, a new voice mail, or the like. However, it is understood that the application is not limited to the notifications listed above.

While a particular embodiment of the present communication device has been described herein, it will be appreciated by those skilled in the art that changes and modifications may be made thereto without departing from the disclosure in its broadest aspects and as set forth below.

There is provided a communication device including: a housing; a processor enclosed within the housing; a device display provided on the housing and in communication with the processor; at least one navigational input means in communication with the processor; at least one data entry input means in communication with the processor; and a pair of charging contacts oppositely located on said housing, each of said contacts configured for engaging a corresponding charging accessory and enabling charging of the device.

The charging contacts may be oppositely located from and in alignment with each other on said housing.

The housing may include curved edges, said charging contacts may each be located on a corresponding one of said curved edges.

The charging accessory may define a channel for receiving the device, said channel including a base arranged substantially parallel to a ground surface, a front side, a back side and a pair of sidewalls joining said front and back sides, each of said sidewalls including a charger pin, wherein each said charger pin is configured for engaging a corresponding one of said charging contacts.

The device may further include at least one illuminating device, and wherein upon engagement of said charger contacts and said charger pins, at least one of said navigational input means and said data input means is illuminated by said illuminating device.

The illuminating device may be an LED.

The back side may be arranged at an angle relative to said base, wherein upon engagement of said device in said channel, said device rests against said base.

The data input means may be a keyboard including a plurality of keys, wherein a top surface of each of said keys is angled upwards relative to a front face of the housing.

The keyboard may include a left column set of keys and a right column set of keys, said left and right column sets of keys each being angled upwards relative to a front face of the housing in a direction towards a center of said keyboard.

The space bar on said keyboard may be arranged parallel to said front face.

There is also provided a communication device assembly including: a charging accessory defining a channel having a front side, a back side, a pair of sidewalls joining the front and back sides, and a base, each of the sidewalls including a pair of opposing charging pins; and a communication device including a housing, a processor enclosed within the housing, a device display provided on a front face of the housing, at least one navigational input means on the front face, at least one data entry input means on the front face, and a pair of charging contacts provided on opposing sides of the device and configured for engaging corresponding ones of the charging pins for enabling charging of the device.

The base may be arranged substantially parallel to a ground surface on which said accessory rests, said back side being arranged at an angle relative to said base.

The device housing may define curved edges, each of said charging contacts being located on a corresponding one of said curved edges.

The data input means may be a keyboard including a plurality of keys, said keys angled in an upward direction relative to said front face.

The device may further include at least one illuminating device, such that upon engagement of said charging contacts and said charger pins, at least one of said data input means and said navigational input means is illuminated by said illuminating device.

The device may further include a clock application, such that upon engagement of said charging contacts and said charger pins, said clock application is displayed on said display.

The charging accessory base may include a pair of spaced apart buttons each configured for engaging a corresponding opening in the device, each said button provided on a proximal end of a lever, said lever configured for actuating about a pivot point upon engagement of said button in said corresponding opening.

## Claims

1. A communication device assembly comprising:
a charging accessory (250) including:
an accessory housing (251);
a channel (252) defined in the accessory housing and configured for receiving a communication device (100), the channel including a front side (253), a back side (254) opposing the front side, a pair of sidewalls (258) joining the front and back sides, and a base (256);
a pair of oppositely located charger pins (260) each projecting from a corresponding one of said sidewalls and configured for engaging a corresponding one of the charging contacts (194) for charging the device; and
a pair of spaced apart buttons (264) projecting from the base (256) and configured for engaging a corresponding opening (196, 198) on the device when the device is received in the channel (252), and wherein each button (264) is provided on a proximal end (266) of a lever (268), and the distal end of each lever is in contact with a charging pin (260);
the communication device assembly further comprising a communications device (100) comprising:
a housing (150) having curved edges (152);
a pair of charging contacts (194) oppositely located on a corresponding one of the curved edges (152) configured for engaging the corresponding pair of oppositely located charger pins (260) on the charging accessory (250);
at least one opening (196, 198) on the device for engaging the corresponding pair of spaced apart buttons (264) of the charging accessory (250) when the device is received in the channel (252);
wherein each of the charging contacts is arranged flush with a corresponding one of the curved edges (152); and
and wherein said lever is configured for actuating about a pivot point (270) upon engagement of said button in said corresponding opening (196, 198) to push each charging pin (260) such that it engages its corresponding charging contact (194).

2. The communication device assembly of claim 1 wherein when the device (100) is received in the channel (252), its weight causes said actuation of the lever (268).

3. The communication device assembly of claim 2 wherein said engagement of each charging pin (260) with its corresponding charging contact (194) ensures that current flows through each charging pin (260) to its corresponding charging contact (194).

4. The communication device assembly of any of claims 1 to 3 wherein said engagement of each charging pin (260) with its corresponding charging contact (194) secures the device (100) within the channel (252).

5. The communication device assembly of any preceding claim wherein the charging contacts (194) are depressible.

6. The communication device assembly of any preceding claim wherein the backside (254) of the channel (252) is arranged at an obtuse angle relative to the base (256) of the channel.

## Patentansprüche

1. Kommunikationsvorrichtungsanordnung, aufweisend:
eine Ladeeinrichtung (250) umfassend:
ein Zubehörgehäuse (251);
einen Kanal (252), der in dem Zubehörgehäuse definiert ist und konfiguriert ist, eine Kommunikationsvorrichtung (100) aufzunehmen, wobei der Kanal eine Vorderseite (253), eine Rückseite (254) gegenüber der Vorderseite, ein Paar Seitenwände (258) verbunden mit den Vorder- und Rückseiten, und eine Basis (256) umfasst;
ein Paar von gegenüberliegend befindlichen Ladestiften (260), die jeweils aus einer der entsprechenden Seitenwände abstehen und konfiguriert sind, mit einem entsprechenden Ladekontakt der Ladekontakte (194) zum Laden der Vorrichtung in Wirkverbindung zu stehen; und
ein Paar von voneinander beabstandeten Knöpfen (264), die von der Basis (256) abstehen und konfiguriert sind, mit einer entsprechenden Öffnung (196, 198) an der Vorrichtung in Wirkverbindung zu stehen, wenn die Vorrichtung in dem Kanal (252) aufgenommen ist, und wobei jeder Knopf (264) an einem nahe gelegenen Ende (266) eines Hebels (268) bereitgestellt ist, und das entfernt gelegene Ende jedes Hebels mit dem Ladestift (260) in Kontakt steht;
die Kommunikationsvorrichtungsanordnung ferner aufweisend eine Kommunikationsvorrichtung (100), die umfasst:
ein Gehäuse (150) mit gebogenen Kanten (152);
ein Paar von Ladekontakten (194), die sich gegenüberliegend an einer entsprechenden Kante der gebogenen Kanten (152) befinden und konfiguriert sind, um mit einem entsprechenden Paar von gegenüberliegend befindlichen Ladestiften (260) an der Ladeeinrichtung (250) in Wirkverbindung zu stehen;
zumindest eine Öffnung (196, 198) an der Vorrichtung um mit dem entsprechenden Paar von beabstandeten Knöpfen (264) der Ladeeinrichtung (250) in Wirkverbindung zu stehen, wenn die Vorrichtung in dem Kanal (252) aufgenommen ist;
wobei jeder der Ladekontakte bündig mit einer entsprechenden Kante der gebogenen Kante (152) angeordnet ist; und
und wobei dieser Hebel zur Betätigung um einen Anlenkpunkt (270) bei Wirkverbindung des besagten Knopfes in der besagten entsprechenden Öffnung (196, 198) konfiguriert ist, um jeden Ladestift (260) derart zu drücken, dass er mit dessen entsprechenden Ladekontakt (194) in Wirkverbindung steht.

2. Kommunikationsvorrichtungsanordnung nach Anspruch 1, wobei wenn die Vorrichtung (100) in dem Kanal (252) aufgenommen ist, ihr Gewicht die besagte Betätigung des Hebels (268) verursacht.

3. Kommunikationsvorrichtungsanordnung nach Anspruch 2, wobei die besagte Wirkverbindung jedes Ladestifts (260) mit seinem entsprechenden Ladekontakt (194) sicherstellt, dass ein Strom durch jeden Ladestift (260) hin zu dessen entsprechenden Ladekontakt (194) strömt.

4. Kommunikationsvorrichtungsanordnung nach einem der Ansprüche 1 bis 3, wobei die besagte Wirkverbindung jedes Ladestifts (260) mit dessen entsprechendem Ladekontakt (194) die Vorrichtung (100) innerhalb des Kanals (252) sichert.

5. Kommunikationsvorrichtungsanordnung nach einem der vorstehenden Ansprüche, wobei die Ladekontakte (194) herunterdrückbar sind.

6. Kommunikationsvorrichtungsanordnung nach einem der vorstehenden Ansprüche, wobei die Rückseite (254) des Kanals (252) unter einem stumpfen Winkel bezüglich der Basis (256) des Kanals angeordnet sind.

## Revendications

1. Ensemble de dispositif de communication, comprenant :
un accessoire de charge (250) comprenant :
un boîtier d'accessoire (251) ;
un canal (252) défini dans le boîtier d'accessoire et configuré pour recevoir un dispositif de communication (100), le canal comprenant un côté avant (253), un côté arrière (254) opposé au côté avant, une paire de parois latérales (258) reliant les côtés avant et arrière, et une base (256) ;
une paire de broches de chargeur situées de manière opposée (260) chacune faisant saillie à partir d'une desdites parois latérales correspondante et configurée pour entrer en prise avec l'un des contacts de charge correspondant (194) pour charger le dispositif ; et
une paire de boutons espacés (264) faisant saillie à partir de la base (256) et configurés pour entrer en prise avec une ouverture correspondante (196, 198) sur le dispositif lorsque le dispositif est reçu dans le canal (252), et chaque bouton (264) étant prévu sur une extrémité proximale (266) d'un levier (268), et l'extrémité distale de chaque levier étant en contact avec une broche de charge (260) ;
l'ensemble de dispositif de communication comprenant en outre un dispositif de communication (100) comprenant :
un boîtier (150) ayant des bords arrondis (152) ;
une paire de contacts de charge (194) situés de manière opposée sur un des bords arrondis (152) correspondant configurée pour entrer en prise avec la paire correspondante de broche de chargeur située de manière opposée (260) sur l'accessoire de charge (250) ;
au moins une ouverture (196, 198) sur le dispositif pour entrer en prise avec la paire correspondante de boutons espacés (264) de l'accessoire de charge (250) lorsque le dispositif est reçu dans le canal (252) ;
dans lequel chacun des contacts de charge est agencé au même niveau qu'un des bords arrondis correspondant (152) ; et
dans lequel ledit levier est configuré pour être actionné autour d'un point de pivot (270) lors de la mise en prise dudit bouton dans ladite ouverture correspondante (196, 198) pour pousser chaque broche de charge (260) de sorte qu'il entre en prise avec son contact de charge correspondant (194).

2. Ensemble de dispositif de communication selon la revendication 1, dans lequel, lorsque le dispositif (100) est reçu dans le canal (252), son poids provoque l'actionnement dudit levier (268).

3. Ensemble de dispositif de communication selon la revendication 2, dans lequel ladite mise en prise de chaque broche de charge (260) avec son contact de charge correspondant (194) assure que le courant passe à travers chaque broche de charge (260) vers son contact de charge correspondant (194).

4. Ensemble de dispositif de communication selon l'une quelconque des revendications 1 à 3, dans lequel ladite mise en prise de chaque broche de charge (260) avec son contact de charge correspondant (194) fixe le dispositif (100) à l'intérieur du canal (252).

5. Ensemble de dispositif de communication selon l'une quelconque des revendications précédentes, dans lequel les contacts de charge (194) peuvent être enfoncés.

6. Ensemble de dispositif de communication selon l'une quelconque des revendications précédentes, dans lequel le côté arrière (254) du canal (252) est agencé à un angle obtus par rapport à la base (256) du canal.
